(19) Europäisches Patentamt / European Patent Office / Office européen des brevets

(11) **EP 2 366 986 B1**

(12) **FASCICULE DE BREVET EUROPEEN**

(45) Date de publication et mention
de la délivrance du brevet:
**30.09.2015   Bulletin 2015/40**

(51) Int Cl.:
***G01J 3/453*** *(2006.01)*

(21) Numéro de dépôt: **11156249.2**

(22) Date de dépôt: **28.02.2011**

(54) **Procédé de métrologie pour la mesure de différences de chemin optique dans un interféromètre statique**

Metrologieverfahren zur Messung optischer Gangunterschiede in einem statischen Interferometer

Metrology procedure for the measurement of optical path differences in a static interferometer

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **02.03.2010   FR 1051495**

(43) Date de publication de la demande:
**21.09.2011   Bulletin 2011/38**

(73) Titulaire: **CENTRE NATIONAL D'ETUDES
SPATIALES
75001 Paris (FR)**

(72) Inventeurs:
• **Pierangelo, Clémence
31400, TOULOUSE (FR)**
• **Buil, Christian
31320, Castanet (FR)**

(74) Mandataire: **Regimbeau
20, rue de Chazelles
75847 Paris Cedex 17 (FR)**

(56) Documents cités:
FR-A1- 2 787 186

• BRACHET F ET AL: "Static Fourier transform
spectroscopy breadboards for atmospheric
chemistry and climate", PROCEEDINGS OF THE
SPIE, vol. 7100, 2008, pages 710019-1-710019-11,
XP002604364, THE INTERNATIONAL SOCIETY
FOR OPTICAL ENGINEERING SPIE, USA ISSN:
0277-786X, DOI: 10.1117/12.797686

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE DE L'INVENTION**

L'invention concerne le domaine de l'interférométrie à transformée de Fourier statique. Plus précisément, elle concerne un procédé de métrologie pour interféromètre à transformée de Fourier statique.

**ETAT DE L'ART**

En interférométrie à transformée de Fourier statique, on élabore un interférogramme en créant un nombre fini de différences de chemin optique réparties spatialement, et acquises par une matrice de détection. Ceci peut être réalisé à l'aide d'une multitude de surfaces réfléchissantes en parallèle, appelées échelettes, et d'un système optique imageant ces échelettes sur un détecteur. Ce concept d'interféromètre statique ou à échelettes est largement décrit dans le brevet FR2787186. On retrouve un interféromètre similaire dans le document « Static Fourier transform spectroscopy breadboards for atmospheric chemistry and climate », Brachet et al., Proceedings of the SPIE, vol. 7100, 2008, p.710019-1-710019-11.

Les instruments de type interféromètre statique connaissent divers applications, comme par exemple la surveillance de la pollution atmosphérique par spectrométrie infrarouge, qui est réalisée en embarquant l'instrument sur un satellite en orbite. De manière générale, l'utilisation de l'interféromètre statique implique des spécifications très sévères sur l'instrument.

Un point critique des spécifications est la connaissance très précise des différences de chemin optique causées par les miroirs comportant une multitude de surfaces réfléchissantes en parallèle, ou échelettes. La précision requise est en général de l'ordre du nanomètre.

De plus, un suivi régulier des différences de chemin optique est nécessaire car leurs valeurs fluctuent en raison d'effets thermiques ou mécaniques.

Il existe divers procédés de métrologie permettant d'obtenir une mesure des différences de chemin optique causées par les échelettes. Un de ces procédés consiste à illuminer chaque échelette avec un laser accordable, et à balayer une bande de longueurs d'onde donnée. Ceci permet de mesurer les différences de chemin optique causées par la géométrie des échelettes.

Un inconvénient de ce procédé est qu'il n'est pas applicable à toutes les longueurs d'onde, car il est difficile de trouver un laser accordable à certaines longueurs d'ondes, comme par exemple à $10\mu$m.

Un autre inconvénient encore est que ce procédé est long, et nécessite de très nombreuses images laser.

Par conséquent, il rend l'instrument de mesure indisponible pendant une longue période, ce qui est préjudiciable pour de nombreuses applications, comme par exemple dans le cas de mesures effectuées à partir d'un satellite en orbite.

Enfin ce type de procédé nécessite un dispositif complexe et lourd à mettre en oeuvre.

**PRESENTATION DE L'INVENTION**

L'invention propose de pallier au moins un de ces inconvénients.

A cet effet, l'invention propose un procédé de métrologie d'un interféromètre statique comprenant une lame séparatrice apte à séparer un faisceau incident vers un premier et un deuxième miroirs, le premier miroir présentant N surfaces réfléchissantes sensiblement planes et parallèles entre elles, lesdites surfaces étant décalées entre elles et réalisant N premières hauteurs de marche, le deuxième miroir présentant M surfaces réfléchissantes sensiblement planes et parallèles entre elles, lesdites surfaces étant décalées entre elles et réalisant M deuxièmes hauteurs de marche, les hauteurs de marche correspondant à la distance entre chaque surface et la lame, de sorte que les deux miroirs fournissent une pluralité de faisceaux réfléchis présentant entre eux des différences de chemin optique égales aux N*M sommes croisées des premières hauteurs de marche et des deuxièmes hauteurs de marche, ledit procédé étant caractérisé en ce qu'il comprend au moins les étapes consistant à :

- acquérir un interférogramme d'intensité (I(x,y)) à partir d'un faisceau incident monochromatique,
- estimer lesdites N+M premières et deuxièmes hauteurs de marche par résolution d'un système d'équations liant l'intensité I(x,y) mesurée aux N+M premières et deuxièmes hauteurs de marche, ledit système exploitant les corrélations et dépendances géométriques des miroirs, et
- déduire les N*M différences de chemin optique à partir des N+M premières et deuxièmes hauteurs de marche.

L'invention est avantageusement complétée par les caractéristiques suivantes, prises seules ou en une quelconque de leur combinaison techniquement possible :

- le système d'équations liant l'intensité I(x,y) aux premières et deuxièmes hauteurs de marche $h_{M1}$, $h_{M2}$ s'écrit I(x,y)=cos(2$\pi$.$\sigma$.($h_{M1}$+$h_{M2}$)), où $\sigma$ est le nombre d'onde du faisceau incident monochromatique ;
- les premières et deuxièmes hauteurs de marche sont chacune prises comme égales à la somme d'une composante connue ($p_{M1}$ ;$p_{M2}$) et d'une composante inconnue ($a_{M1}$ ;$a_{M2}$) et en ce que l'on estime les N+M composantes inconnues par résolution dudit système liant l'intensité aux hauteurs de marche;
- l'étape d'estimation des N+M composantes inconnues est itérée en intégrant à la composante connue utilisée pour l'itération courante la composante inconnue déterminée à l'itération précédente ;
- la composante inconnue est la somme d'une composante axiale selon la direction du faisceau incident qui tombe sur ce miroir, et d'une composante transversale supérieure ou égale à zéro représentant les inclinaisons par rapport à au moins une des directions de l'espace des surfaces réfléchissantes du premier miroir et/ou des surfaces réfléchissantes du deuxième miroir, l'étape d'estimation des hauteurs de marche comprenant l'estimation desdites composantes axiales et transversales ;
- la résolution du système liant l'intensité aux hauteurs de marche comprend une étape d'estimation des sommes croisées ($a_{M1}$+$a_{M2}$) des composantes inconnues à partir de l'équation I(x,y) = cos(2$\pi$.$\sigma$($p_{M1}$+$p_{M2}$+$a_{M1}$+$a_{M2}$)), pour en déduire une estimation desdites N+M premières et deuxièmes hauteurs de marche ;
- l'estimation des sommes ($a_{M1}$+$a_{M2}$) des composantes inconnues est mise en oeuvre en appliquant la fonction cosinus inverse à l'équation I(x,y)=cos(2$\pi$.$\sigma$.($p_{M1}$+$p_{M2}$+$a_{M1}$+$a_{M2}$));
- on estime les composantes inconnues $a_{M1}$,$a_{M2}$ représentées par un vecteur A, à partir de l'estimation des sommes ($a_{M1}$+$a_{M2}$) desdites composantes inconnues, représentées par un vecteur Y, en inversant l'équation matricielle Y = W * A, où W est la matrice de passage entre Y et A;
- l'estimation des composantes inconnues $a_{M1}$, $a_{M2}$ est mis en oeuvre en effectuant un développement limité de l'équation I(x,y)=cos(2$\pi$.$\sigma$($p_{M1}$+$p_{M2}$+$a_{M1}$+$a_{M2}$)) autour de l'infiniment petit 2$\pi$.$\sigma$.($a_{M1}$+$a_{M2}$);
- le procédé comprend une étape d'estimation de l'amplitude du faisceau incident monochromatique ;
- l'étape d'estimation de l'amplitude $\alpha$ du faisceau incident monochromatique de nombre d'onde $\sigma$ est mise en oeuvre en minimisant selon $\alpha$ la fonction f ($\alpha$) = I(x,y) - $\alpha$.cos(2$\pi$.$\sigma$.$\delta$(x,y)).

L'invention présente de nombreux avantages.

Un avantage de l'invention est de permettre une mesure des différences de chemin optique en utilisant simplement une source monochromatique de type laser.

Un autre avantage est de permettre une mesure rapide des différences de chemin optique, à partir d'un unique interférogramme.

Un autre avantage encore est que l'invention permet d'obtenir une mesure des différences de chemin optique avec une précision élevée.

Un autre avantage encore est que l'invention nécessite des équipements moins encombrants que ceux utilisés dans l'art antérieur.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 est un schéma optique général d'un mode de réalisation d'un interféromètre statique ;
- la figure 2 est un exemple d'image spatiale d'un interférogramme obtenue avec un interféromètre statique ;
- la figure 3 est un schéma bloc d'une réalisation possible du procédé selon l'invention.

## DESCRIPTION DETAILLEE

### Présentation de l'interféromètre

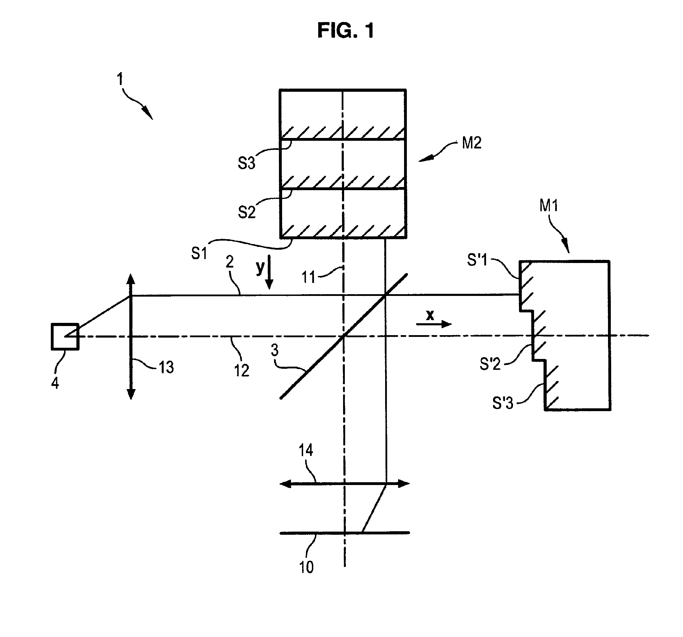

En figure 1, on a représenté un schéma optique de principe d'un interféromètre 1 statique. L'interféromètre 1 statique comprend une lame séparatrice 3, apte à séparer un faisceau 2 incident en plusieurs faisceaux dirigés sur deux miroirs constitués d'un premier miroir M1 et d'un deuxième miroir M2.

Le premier miroir M1 présente un ensemble de N surfaces ($S_1$, $S_2$, $S_3$... ,$S_N$) réfléchissantes sensiblement planes et parallèles entre elles. Les surfaces ($S_1$, $S_2$, $S_3$... ,$S_N$) réfléchissantes sont décalées l'une par rapport à l'autre et réalisent N premières hauteurs de marche $h_{M1}$(x).

De même, le miroir M2 présente un ensemble de surfaces ($S'_1$, $S'_2$, $S'_3$... ,$S'_M$) réfléchissantes sensiblement planes et parallèles entre elles. Les surfaces ($S'_1$, $S'_2$, $S'_3$... ,$S'_M$) réfléchissantes sont décalées l'une par rapport à l'autre et réalisent M deuxièmes hauteurs de marche $h_{M2}$(y).

Les premières et deuxièmes hauteurs de marche $h_{M1}(x)$, $h_{M2}(y)$ correspondent à la distance entre chaque surface ($S_1$, $S_2$, $S_3$... ,$S_N$, $S'_1$, $S'_2$, $S'_3$... ,$S'_M$) et la lame 3 séparatrice, selon la direction (x,y) du faisceau issu de la lame 3 séparatrice et arrivant sur la surface réfléchissante.

Chaque hauteur de marche est avantageusement définie comme la distance entre le centre de la surface réfléchissante et la lame 3 séparatrice selon la direction du faisceau issu de la lame 3 et dirigé au centre de ladite surface réfléchissante.

Comme cela sera explicité par la suite, ces distances sont exprimées algébriquement (signe positif ou négatif selon la convention d'orientation des axes (x,y)).

Pour le miroir M1, le décalage se fait par exemple selon la direction x du faisceau 2 arrivant sur ce miroir et issu de la lame 3 séparatrice. Pour le miroir M2, le décalage se fait par exemple selon la direction y du faisceau 2 arrivant sur ce miroir et issu de la lame 3 séparatrice.

Ceci n'est pas obligatoire et la direction de décalage des surfaces peut être selon toute direction de l'espace, et dépend notamment de l'orientation angulaire de la lame séparatrice 3. En figure 1, la lame séparatrice 3 est orientée à 45°.

Si les hauteurs de marche sont ordonnées, le décalage des surfaces réfléchissantes donne au miroir un aspect semblable à des marches d'escalier. Il est possible d'avoir des hauteurs de marche non ordonnées donnant au miroir l'aspect de marches d'escaliers ascendantes puis descendantes, ou le contraire.

Il est clair qu'il est possible d'utiliser deux miroirs M1 et M2 ayant le même nombre de surfaces réfléchissantes, ce qui implique que N=M. Un nombre typique de surfaces réfléchissantes pour un miroir selon l'invention est « N=32 », donné à titre d'exemple non limitatif.

Les surfaces ($S_1$, $S_2$, $S_3$... ,$S_N$ et/ou $S'_1$, $S'_2$, $S'_3$... ,$S'_M$) réfléchissantes sont sensiblement planes et parallèles, puisqu'il est difficile d'obtenir des surfaces ($S_1$, $S_2$, $S_3$... ,$S_N$; $S'_1$, $S'_2$, $S'_3$... ,$S'_M$) réfléchissantes parfaitement planes et parallèles. En effet, la fabrication des miroirs (M1, M2) impose un usinage très précis, et l'homme du métier est conscient qu'un tel usinage implique des erreurs de réalisation.

De manière avantageuse, l'un des deux miroirs (par exemple M1) possède des surfaces ($S_1$, $S_2$, $S_3$... , $S_N$) réfléchissantes présentant des décalages très fins (de l'ordre de quelques dizaines à une centaine de microns) selon l'axe x du faisceau 2 incident à ce miroir, tandis que l'autre miroir M2 possède des surfaces ($S'_1$, $S'_2$, $S'_3$... ,$S'_M$) réfléchissantes présentant des décalages plus grands selon l'axe y du faisceau 2 incident à ce miroir. Ceci permet d'obtenir des différences de chemin optique plus finement échantillonnées.

Par exemple, l'un des miroirs (par exemple M1) a un décalage selon l'axe x entre la surface $S_1$ réfléchissante, qui est la surface la moins décalée selon l'axe x, et la surface $S_N$ réfléchissante, qui est la surface la plus décalée selon l'axe x, égal au décalage selon l'axe y entre deux surfaces réfléchissantes consécutives ($S'_j$ et $S'_{j+1}$) de l'autre miroir M2.

On voit en figure 1 que ces surfaces ($S_1$, $S_2$, $S_3$... ,$S_N$; $S'_1$, $S'_2$, $S'_3$... ,$S'_M$) réfléchissantes ont par exemple une forme rectangulaire.

Par ailleurs, les premiers et deuxièmes miroirs M1 et M2 sont conjugués par rapport à la lame séparatrice 3, ce qui signifie qu'ils sont images l'un de l'autre par rapport à la dite lame. Il est à noter que pour obtenir cette conjugaison, il n'est pas obligatoire que l'axe médian 11 du miroir M1 et l'axe médian 12 du miroir M2 soient perpendiculaires, comme cela est représenté en figure 1.

L'interféromètre 1 statique comporte en outre une matrice 10 de détection qui détecte l'intensité des faisceaux lumineux renvoyés par les miroirs M1 et M2.

Enfin, l'interféromètre 1 statique comprend une optique 13 d'entrée par laquelle entrent des faisceaux lumineux émis par une source 4 lumineuse, et une optique 14 de sortie intercalée entre la lame séparatrice 3 et la matrice 10 de détection. L'optique 13 d'entrée par laquelle entrent les faisceaux lumineux peut tout aussi bien se situer entre les miroirs et le détecteur, ce qui fait pénétrer les faisceaux lumineux à travers l'autre face de la lame séparatrice 3.

*Mise en oeuvre de l'interférométrie*

Dans le procédé selon l'invention, un faisceau 2 incident monochromatique est émis en direction des miroirs M1, M2. Ce type de faisceau est en général émis par une source 4 monochromatique. La source 4 monochromatique est typiquement un laser. Ce type de source est aisé à utiliser et est peu encombrant.

En général, l'interféromètre étant utilisé pour analyser un rayonnement compris dans une bande spectrale donnée (par exemple, la bande spectrale du rayonnement infrarouge), l'on choisit alors dans le procédé de métrologie selon l'invention un faisceau 2 incident de longueur d'onde comprise dans ladite bande spectrale.

Le faisceau 2 incident émis par la source 4 monochromatique traverse l'optique 13 d'entrée, pour être dirigé vers la lame séparatrice 3. La lame séparatrice 3 sépare le faisceau 2 incident par la source 4 monochromatique de telle sorte que chaque miroir (M1,M2) reçoit alors un faisceau 2 incident sur une surface de chacun desdits miroirs (M1,M2).

Etant donné que les surfaces ($S_1$, $S_2$, $S_3$... ,$S_N$; $S'_1$, $S'_2$, $S'_3$... ,$S'_M$) sont décalées entre elles, par exemple selon l'axe x et/ou y des faisceaux incidents à ces surfaces, les faisceaux réfléchis par les surfaces suivent un chemin de longueur différente et présentent alors entre eux un nombre fini N*M de différences de chemin optique δ(x,y), égales aux N*M sommes croisées des N premières hauteurs de marche ($h_{M1}(x)$) des surfaces ($S_1$, $S_2$, $S_3$... ,$S_N$) réfléchissantes du miroir M1 et des M deuxièmes hauteurs de marche ($h_{M2}(y)$) des surfaces ($S'_1$, $S'_2$, $S'_3$... ,$S'_M$) réfléchissantes du miroir M2.

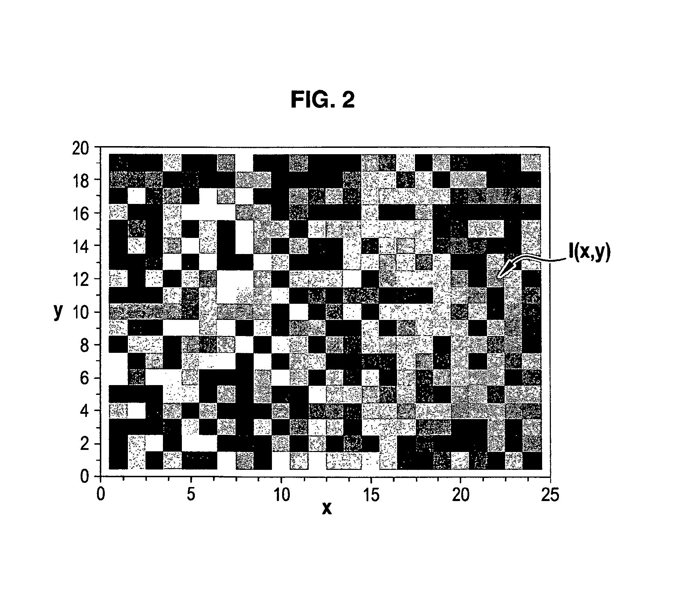

La figure 2 illustre le trajet d'un faisceau séparé par la lame 3 séparatrice et rencontrant les surfaces S1 et S'1 dont les hauteurs de marche sont différentes, ce qui induit une différence de chemin optique.

Comme évoqué plus haut, les hauteurs de marche sont définies de manière algébrique, selon une convention d'orientation, ce qui explique que les différences de chemin optique δ(x,y), sont égales aux N*M sommes croisées des N premières hauteurs de marche ($h_{M1}(x)$) et des M deuxièmes hauteurs de marche ($h_{M2}(y)$).

Dans l'exemple de la figure 2, les premières hauteurs de marche ($h_{M1}(x)$) sont définies comme positives, au vu de l'orientation de l'axe x, tandis que les deuxièmes hauteurs de marche ($h_{M2}(y)$) sont définies comme négatives, au vu de l'orientation de l'axe y. Il est clair qu'il s'agit simplement d'une convention de signe et qu'il est possible de procéder à une définition inverse, en inversant les sens des axes x et y.

Par ailleurs, les différences de chemin optique δ(x,y) peuvent également être dues au fait que les surfaces réfléchissantes (S1, S2, S3,... et/ou S1', S2', S3',...) ne sont pas parfaitement planes et parallèles entre elles.

Il existe d'autres causes provoquant une variation des hauteurs de marche et donc des différences de chemin optique δ(x,y), comme par exemple des effets thermiques, des effets de contrainte mécanique liée au support, des effets liés à la gravité (notamment pour les applications spatiales), l'ensemble desdites causes étant bien connu de l'homme du métier.

Comme les faisceaux réfléchis par les premiers et deuxièmes miroirs M1 et M2 présentent entre eux des différences de chemin optique δ(x,y), la matrice 10 de détection acquiert un interférogramme, dont l'intensité I(x,y) dépend des différences de chemin optique δ(x,y) des faisceaux réfléchis par les miroirs M1 et M2. L'intensité I(x,y) dépend également du nombre d'onde σ du faisceau 2 incident monochromatique. On rappelle que le nombre d'onde σ est défini comme l'inverse de la longueur d'onde λ, c'est-à-dire $\sigma = \dfrac{1}{\lambda}$.

On a représenté en figure 2 un exemple d'interférogramme d'intensité I(x,y) obtenu avec un faisceau 2 incident monochromatique.

En pratique, l'interférogramme d'intensité I(x,y) est obtenu en illuminant simultanément avec un faisceau 2 incident la surface $S'_1$ réfléchissante et la surface $S_1$ réfléchissante, la surface $S'_1$ réfléchissante et la surface $S_2$ réfléchissante et l'ensemble des combinaisons surfaces $S_i$ et $S'_j$ réfléchissantes, pour i allant de 1 à N et j allant de 1 à M.

On obtient donc un interférogramme dont l'intensité I(x,y) est enregistrée sur une matrice de N*M facettes, en général de formes carrées. Chaque facette carrée de position (x,y) sur la matrice de taille N*M correspond à une différence de chemin optique δ(x,y), ce qui donne en tout N*M mesures d'intensité.

*Estimation des différences de chemin optique*

Etant donné que l'interféromètre 1 statique possède une configuration de miroirs particulière, il existe des corrélations entre les différentes intensités obtenues dans l'interférogramme d'intensité I(x,y).

Ainsi, toutes les différences de chemin optique δ (x,y) liées à une même surface du premier miroir M1 seront corrélées. De même, toutes les différences de chemin optique δ(x,y) liées à une même surface du deuxième miroir M2 seront corrélées. Dans l'interférogramme d'intensité I(x,y) de la figure 2, cela signifie que dans une ligne x donnée, les valeurs des différences de chemin optique δ(x,y) sont corrélées. Il est en de même pour une colonne y donnée.

Le procédé selon l'invention tire avantageusement parti du fait que l'interférogramme d'intensité I(x,y) est obtenu en croisant les hauteurs de marche de deux miroirs, ce qui entraîne une corrélation entre les intensités obtenues.

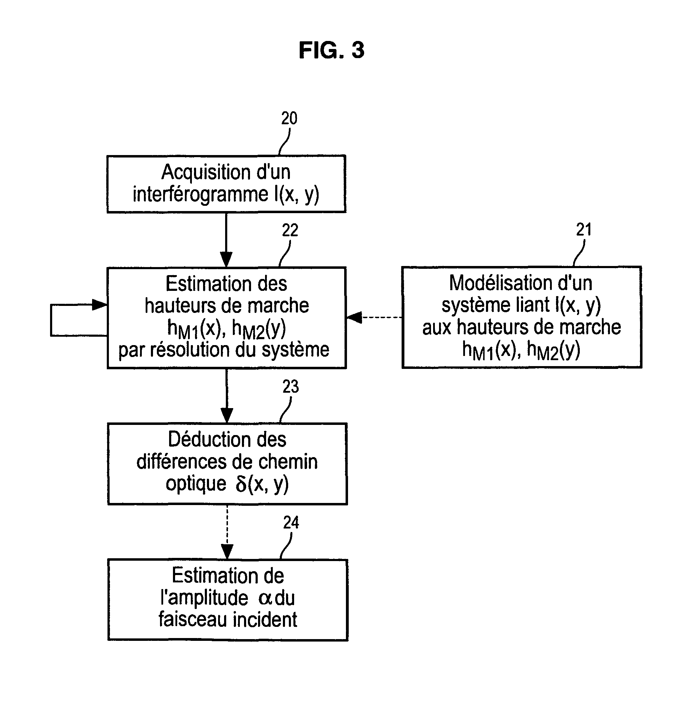

Pour mesurer les différences de chemin optique en exploitant ces propriétés de corrélation, le procédé selon l'invention comprend notamment les étapes illustrées en figure 3.

La première étape, déjà décrite, consiste en l'acquisition 20 d'un interférogramme d'intensité I(x,y), via une illumination des surfaces réfléchissantes par un faisceau 2 incident monochromatique.

A ce stade, l'on dispose de N*M mesures I(x,y), acquises par la matrice 10 de détection, mais également de N*M inconnues, correspondant aux N*M différences de chemin optique δ(x,y) à estimer.

Estimer les N*M inconnues δ(x,y) directement et uniquement à partir des N*M mesures I(x,y) donnerait une estimation peu précise, étant donné que la relation liant les mesures aux inconnues n'est pas linéaire et que les mesures sont nécessairement bruitées.

En effet, la relation existant entre l'intensité I(x,y) mesurée et les différences de chemin optique δ(x,y) s'écrit en général selon le système d'équations I(x,y) = cos(2.π.σ.(δ(x,y))), où σ est le nombre d'onde du faisceau 2 incident monochromatique.

Le procédé selon l'invention exploite la corrélation qui existe entre les différences de chemin optique $\delta(x,y)$ mesurées.

Cette corrélation se traduit mathématiquement sur les lignes et colonnes de l'interférogramme. Par exemple, si les surfaces réfléchissantes de chaque miroir sont parfaitement parallèles, pour une ligne $x_1$ donnée de l'interférogramme, les différences de chemin optique vont s'écrire ;

$$\delta(x_1,y_1) = h_{M1}(x_1) + h_{M2}(y_1)$$
$$\delta(x_1,y_2) = h_{M1}(x_1) + h_{M2}(y_2)$$
$$\delta(x_1,y_3) = h_{M1}(x_1) + h_{M2}(y_3)$$
$$(\dots)$$
$$\delta(x_1,y_M) = h_{M1}(x_1) + h_{M2}(y_M)$$

Comme on peut le constater, le terme $h_{M1}(x_1)$, correspondant à la hauteur de marche de la surface $S_1$ du premier miroir M1, est présent pour toutes les différences de chemin optique de la ligne $x_1$.

Ces propriétés sont vérifiées pour toutes les lignes et colonnes (x,y) de l'interférogramme. Ainsi, plutôt que de chercher à estimer de manière abrupte les différences de chemin optique, le procédé selon l'invention se base sur l'estimation des N+M premières et deuxièmes hauteurs de marche $h_{M1}, h_{M2}$ des surfaces réfléchissantes des premier et deuxième miroirs M1 et M2.

Ainsi, le procédé selon l'invention met en oeuvre une étape 22 d'estimation desdites N+M premières et deuxièmes hauteurs de marche $(h_{M1}(x); h_{M2}(y))$ de chaque surface réfléchissante $(S_1, S_2, S_3... , S_N; S'_1, S'_2, S'_3... , S'_M)$ par résolution d'un système d'équations liant l'intensité I(x,y) mesurée aux N+M premières et deuxièmes hauteurs de marche $h_{M1}(x)$ et $h_{M2}(y)$ des surfaces réfléchissante $(S_1, S_2, S_3... , S_N; S'_1, S'_2, S'_3... , S'_M)$. Ce système d'équations exploite donc les corrélations et dépendances géométriques des miroirs de l'instrument.

Le système d'équations liant l'intensité I(x,y) aux premières et deuxièmes hauteurs de marche est préalablement modélisé lors d'une étape 21. Ce système d'équations est basé sur la connaissance physique de l'interféromètre. En particulier, ce système d'équations est basé sur la connaissance de la réponse (intensité en sortie de l'interféromètre) d'un interféromètre donné recevant un faisceau incident monochromatique donné.

Ce système d'équations pourra typiquement consister en une modélisation s'écrivant $I(x,y)=\cos(2\pi.\sigma.(h_{M1}+h_{M2}))$. Le nombre d'inconnues décrivant les différences de chemin optique est ainsi grandement réduit.

La résolution peut faire intervenir tout moyen de linéarisation, d'inversion, ou de résolution numérique connu.

Cette résolution peut notamment faire intervenir dans une étape intermédiaire une estimation des sommes croisées des premières et deuxièmes hauteurs de marche, pour en déduire par la suite les hauteurs de marche elles-mêmes.

Il est possible de ne pas utiliser un partie des mesures I(x,y) jugées comme trop bruitées ou indésirables, et donc d'utiliser uniquement un sous-ensemble des N*M mesures I(x,y) pour l'estimation des N+M inconnues.

Enfin, la dernière étape 23 consiste à déduire les N*M différences de chemin optique $\delta(x,y)$ des N+M hauteurs de marche. Cette déduction est immédiate puisque les différences de chemin optique $(\delta(x,y))$ sont égales aux N*M sommes croisées des premières hauteurs de marche $h_{M1}(x)$ et des deuxièmes hauteurs de marche $h_{M2}(y)$, selon la relation $\delta(x,y) = h_{M1}(x) + h_{M2}(y)$.

Il est à noter que le procédé selon l'invention présente de nombreux avantages. Comme on peut le voir en figure 1, un avantage de l'invention est de permettre une mesure des différences de chemin optique en utilisant une source monochromatique de type laser, qui est beaucoup plus simple et moins onéreuse qu'un laser accordable.

De plus, une seule acquisition d'interférogramme est nécessaire, ce qui permet une mesure rapide des différences de chemin optique. Le temps nécessaire pour mettre en oeuvre le procédé de métrologie selon l'invention est donc bien inférieur à celui des procédés de l'art antérieur.

Enfin, le procédé selon l'invention permet une mesure des différences de chemin optique avec une bonne précision.

Par ailleurs, on modélise avantageusement dans le procédé selon l'invention les premières et deuxièmes hauteurs de marche $(h_{M1}(x); h_{M2}(y))$ comme égales à la somme d'une composante connue $(p_{M1}; p_{M2})$ et d'une composante inconnue $(a_{M1}; a_{M2})$. Cela revient à poser $h_{M1}(x) = P_{M1} + a_{M1}$ et $h_{M2}(y) = p_{M2} + a_{M2}$.

Dans ce cas, l'étape 22 d'estimation des N+M premières et deuxièmes hauteurs de marche $(h_{M1}, h_{M2})$ nécessite uniquement l'estimation des N+M composantes inconnues $(a_{M1}; a_{M2})$.

Il est très fréquent que l'on dispose d'une connaissance préalable des hauteurs de marche, qui peut être une connaissance a priori ou provenant d'une précédente mesure.

Cette connaissance peut provenir notamment de données du constructeur, donnant une estimation de la position des marches ce qui permet d'avoir une connaissance des hauteurs de marche avec une certaine marge d'erreur. Cette connaissance peut alternativement provenir d'une mesure selon un procédé de l'art antérieur. Enfin, cette connaissance peut provenir d'une itération précédente du procédé de métrologie selon l'invention, comme cela sera explicité par la suite.

La composante inconnue $(a_{M1};a_{M2})$ correspond à l'erreur de connaissance, qui peut correspondre par exemple à une évolution temporelle des gradients de température dans l'instrument (et donc des indices de réfraction et des différences de chemin optique), et que l'on cherche à connaître le plus précisément possible.

Avantageusement, on itère l'étape 22 d'estimation des N+M composantes inconnues $(a_{M1};a_{M2})$ en intégrant à la composante connue $(p_{M1};p_{M2})$ utilisée pour l'itération courante la composante inconnue $(a_{M1};a_{M2})$ déterminée à l'itération précédente.

Ceci signifie que la composante connue $(p_{M1}^{(n)};p_{M2}^{(n)})$ à l'itération numéro « n » est prise comme égale à la somme de la composante connue $(p_{M1}^{(n-1)};p_{M2}^{(n-1)})$ à l'itération numéro « n-1 » et de la composante inconnue $(a_{M1}^{(n-1)};a_{M2}^{(n-1)})$ déterminée à l'itération numéro « n-1 ».

Ainsi, l'on affine à chaque itération l'estimation des hauteurs de marche, en prenant en compte la mesure effectuée à l'itération précédente. La mesure est donc rendue plus précise.

Dans un mode de réalisation particulier, on prend également en compte l'éventuelle inclinaison des surfaces réfléchissantes dans le sens de leur longueur.

Pour ce faire, il est possible de modéliser la composante inconnue $(a_{M1};a_{M2})$ comme la somme d'une composante axiale $(a^1_{M1};a^1_{M2})$ selon la direction $(x;y)$ du faisceau 2 incident qui tombe sur ce miroir, et d'une composante transversale $(i_{M1};i_{M2})$ supérieure ou égale à zéro représentant les inclinaisons par rapport à au moins une des directions de l'espace $(x,y)$ des surfaces $(S_1, S_2, S_3... ,S_M)$ réfléchissantes du premier miroir (M1) et/ou des surfaces $(S'_1, S'_2, S'_3... ,S'_M)$ réfléchissantes du deuxième miroir (M2).

En général, chaque composante transversale $(i_{M1};i_{M2})$ est modélisée selon :

$$i_{M1}(x, y) = b^1_{M_1}(x).y \text{ et } i_{M2}(x, y) = b^1_{M_2}(y).x \,,$$

où $\left( b^1_{M_1}, b^1_{M_2} \right)$ sont des coefficients d'inclinaisons supérieurs ou égaux à zéro. Cette modélisation correspondant à une pente d'inclinaison constante selon la longueur de la surface réfléchissante.

Dans ce cas, le nombre d'inconnues augmente, mais reste tout de même strictement inférieur aux N*M mesures. L'étape d'estimation 22 comprend alors l'estimation des composantes axiales $(a^1_{M1};a^1_{M2})$ et des coefficients d'inclinaison $(b^1_{M1};b^1_{M2})$, ce qui permet d'en déduire les composantes inconnues $a_{M1},a_{M2}$, et donc les hauteurs de marche $h_{M1},h_{M2}$.

On décrira à présent des exemples de mise en oeuvre de l'estimation des différences de chemin optique.

*Exemples de réalisation de l'estimation des différences de chemin optique*

Comme décrit précédemment, il est possible d'exprimer à l'étape 21 l'intensité $I(x,y)$ en fonction des premières et deuxièmes hauteurs de marche selon le système d'équations :

$$I(x,y)=\cos(2\pi.\sigma.(h_{M1}+h_{M2}))$$

Cette modélisation de l'interférogramme d'intensité $I(x,y)$ est obtenue à partir d'un faisceau 2 incident monochromatique de nombre d'onde $\sigma$.

Il est à noter que d'autres modélisations sont possibles, notamment si l'on prend en compte une fonction d'auto-apodisation (diminution du contraste quand la différence de chemin optique augmente), ou des effets de gains inter-pixels sur la matrice 10 de détection. On suppose ici que les effets décrits ci-dessus ont été corrigés et que la ligne de base, c'est à dire la partie non modulée du signal de l'interférogramme, a été retirée. De plus, le contraste de l'interférogramme est supposé avoir été ramené à une valeur unitaire, par un étalonnage préalable des mesures.

En se plaçant dans le cas où l'on dispose d'une connaissance a priori des différences de chemin optique, il est possible de réécrire ce système d'équations selon :

$$I(x,y)=\cos(2\pi.\sigma.(p_{M1}+p_{M2}+a_{M1}+a_{M2})),$$

où $p_{M1}$, $p_{M2}$ sont les composantes connues des hauteurs de marche, et $a_{M1}$, $a_{M2}$ sont les composantes inconnues à estimer.

On dispose donc à l'issue de l'étape 21 d'un système d'équations liant l'intensité $I(x,y)$ mesurée aux composantes inconnues $a_{M1}$, $a_{M2}$ des hauteurs de marche.

Dans un premier mode de réalisation, l'on met en oeuvre l'étape 22 en résolvant les équations $I(x,y)=\cos(2\pi.\sigma.(p_{M1}+p_{M2}+a_{M1}+a_{M2}))$ par développement du cosinus et développement limité autour du terme $2\pi.\sigma.(a_{M1}+a_{M2})$, qui est un infiniment petit.

Ainsi, l'équation $I(x,y)=\cos(2\pi.\sigma.(p_{M1},+p_{M2}+a_{M1}+a_{M2}))$ devient:

$$I(x,y)=\cos(2\pi.\sigma.(p_{M1}+p_{M2}+a_{M1}+a_{M2}))$$

$$\Leftrightarrow I(x,y)=\cos(2\pi.\sigma.(p_{M1}+p_{M2}))*\cos(2\pi\sigma(a_{M1}+a_{M2})) - \sin(2\pi.\sigma.(p_{M1}+p_{M2})) *$$

$$\sin(2\pi\sigma(a_{M1}+a_{M2}))$$

$$\Leftrightarrow I(x,y)=\cos(2\pi.\sigma.(p_{M1}+p_{M2}))*[\cos(2\pi\sigma(a_{M1}))\cos(2\pi\sigma(a_{M2})) -$$

$$\sin(2\pi\sigma(a_{M1}))\sin(2\pi\sigma(a_{M2}))]- \sin(2\pi.\sigma.(p_{M1}+p_{M2}))*2\pi\sigma(a_{M1}+a_{M2})$$

$$\Leftrightarrow I(x,y)=\cos(2\pi.\sigma.(p_{M1}+p_{M2}))*[1 - 2\pi\sigma(a_{M1}))2\pi\sigma(a_{M2})]-$$

$$\sin(2\pi.\sigma.(p_{M1}+p_{M2}))*2\pi\sigma(a_{M1}+a_{M2})$$

On résout alors ce système d'équations en déterminant les N+M composantes inconnues $a_{M1}$ et $a_{M2}$ à partir des N*M mesures $I(x,y)$, ou d'un sous-ensemble de ces N*M mesures. Ce sous-ensemble est choisi par exemple en éliminant les mesures trop bruitées. Une fois les composantes inconnues $a_{M1}$ et $a_{M2}$ estimées, l'on peut déterminer immédiatement les premières et deuxièmes hauteurs de marche (via les relations $h_{M1}(x) = p_{M1} + a_{M1}$ et $h_{M2}(y) = p_{M2} + a_{M2}$) et par la suite les différences de chemin optique à l'étape 23, via la relation $\delta(x,y) = h_{M1}(x) + h_{M2}(y)$.

Comme énoncé précédemment, il est avantageux d'itérer l'étape 22 d'estimation en intégrant à la composante connue $(p_{M1} ; p_{M2})$ utilisée pour l'itération courante la composante inconnue $(a_{M1} ; a_{M2})$ déterminée à l'itération précédente.

Dans un deuxième mode de réalisation de l'invention, l'étape 22 d'estimation des premières et deuxièmes hauteurs de marche $h_{M1}, h_{M2}$, impliquant la résolution du système d'équations liant les premières et deuxièmes hauteurs de marche à l'intensité $I(x,y)$, est mise en oeuvre en estimant dans une étape intermédiaire les sommes croisées $a_{M1}+a_{M2}$ des composantes inconnues, pour en déduire par la suite les dites composantes inconnues $a_{M1}$, $a_{M2}$, et par là les premières et deuxièmes hauteurs de marche $h_{M1}, h_{M2}$. Ainsi, les hauteurs de marche ne sont pas estimées directement mais déduites des sommes croisées de leurs composantes inconnues.

Pour ce faire, il est avantageux d'appliquer la fonction cosinus inverse à l'équation :

$$I(x,y) = \cos\left(2\pi\sigma\left(p_{M1}(x) + a_{M1}(x) + p_{M2}(y) + a_{M2}(x)\right)\right),$$

Dans un premier temps, on cherche donc à estimer les sommes croisées $\alpha_{M1}(x) + \alpha_{M2}(y)$ des composantes inconnues.

Pour estimer ces sommes croisées, l'équation précédente est alors modifiée selon :

$$I(x,y) = \cos\left(2\pi\sigma N + \varphi + 2\pi\sigma\left(a_{M1}(x) + a_{M2}(y)\right)\right)$$

où l'on a posé :

$$N = Int(\sigma(p_{M1}(x) + p_{M2}(y)) + 1/2)$$

$$\varphi = 2\pi\sigma(p_{M1}(x) + p_{M2}(y)) - 2N\pi$$

La fonction « Int » est ici la fonction partie entière, qui associe à un nombre réel l'entier qui lui est immédiatement inférieur ou égal. L'entier N et le réel $\varphi$ sont connus.

On pose alors :

$$m = \varphi + 2\pi\sigma(a_{M1}(x, y) + a_{M2}(x, y))$$

L'équation à résoudre s'écrit donc :

$$I(x, y) = \cos(2\pi\sigma N + m)$$

Le résultat de la fonction cosinus inverse, que l'on va appliquer, dépend de la valeur de :

$$m = \varphi + 2\pi\sigma(a_{M1}(x) + a_{M2}(y))$$

La valeur de m peut être comprise dans quatre intervalles :

- Si m est compris entre 0 et $\pi$, alors $\cos^{-1}(I(x,y))=m$ ;
- Si m est compris entre $-\pi$ et 0, alors $\cos^{-1}(I(x,y))=-m$ ;
- Si m est supérieur à $\pi$ et inférieur à $2\pi$, alors $\cos^{-1}(I(x,y))=2\pi-m$ ;
- Si m est supérieur à $-2\pi$ et inférieur à $-\pi$, on obtient alors la relation $\cos^{-1}(I(x,y))=2-\pi+m$.

Néanmoins, m n'est pas connu, seul $\varphi$ est connu. On calcule alors les quatre résultats possibles de la fonction cosinus inverse, et l'on choisit la valeur dont l'écart avec $\varphi$ est minimal. Dans la grande majorité des cas, cela permet de déterminer $\alpha_{M1}(x) + \alpha_{M2}(y)$.

On peut avantageusement choisir de filtrer les résultats incertains, c'est-à-dire ne pas considérer les points pour lesquels la valeur du premier minimum (écart minimum entre le résultat du cosinus inverse et la valeur de $\varphi$) est proche de celle du second minimum (second écart minimum entre le résultat du cosinus inverse et la valeur de $\varphi$).

Dans le cas où $\varphi$ est proche de 0 ou de $\pi$ ou de $-\pi$, la valeur choisie n'est en général pas la bonne.

Les indéterminations en 0 ne peuvent pas être évitées. Les indéterminations en $\pi$ ou $-\pi$ sont uniquement causées par la différence entre $\varphi$ et m, qui est d'autant plus faible que l'erreur de connaissance, c'est-à-dire la somme $\alpha_{M1}(x)+\alpha_{M2}(y)$ des composantes inconnues, est faible. Il est donc possible d'éviter les indéterminations en $\pi$ ou $-\pi$ en minimisant l'erreur de connaissance.

Dans un deuxième temps, on estime les N+M composantes inconnues $a_{M1}$, $a_{M2}$ à partir des sommes croisées $(a_{M1}+a_{M2})$ déterminées par inversion du cosinus, pour en déduire les N+M premières et deuxièmes hauteurs de marche $h_{M1}$, $h_{M2}$.

Il s'agit en fait d'une reconstruction mathématique de variables inconnues $(a_{M1}, a_{M2})$ à partir de la connaissance de leurs sommes croisées $a_{M1}+a_{M2}$.

Divers algorithmes peuvent être utilisés, comme par exemple des algorithmes de type réseaux de neurones, ou des procédés d'inversion matricielle comme une inversion par moindre carrés.

On détaille ici une inversion par moindre carrés. Soit Y le vecteur des sommes des composantes inconnues $\alpha_{M1}(x)+\alpha_{M2}(y)$. Soit A le vecteur des composantes inconnues $a_{M1}, a_{M2}$ à estimer.

Dans le cas où l'on cherche en outre à estimer l'éventuelle inclinaison des surfaces réfléchissantes des miroirs, l'on décompose comme décrit précédemment les composantes inconnues $a_{M1}$, $a_{M2}$ en la somme de composantes axiales $(a^1_{M1} ; a^1_{M2})$ et transversales $(i_{M1} ; i_{M2})$, avec $i_{M1}(x, y) = b^1_{M_1}(x).y$ et $i_{M2}(x, y) = b^1_{M2}(y).x$, les coefficients $b^1_{M1}$ et $b^1_{M2}$ étant des coefficients d'inclinaison. Dans ce cas, le vecteur A comprend les inconnues $a^1_{M1}$, $a^1_{M2}$, $b^1_{M1}$ et $b^1_{M2}$.

Le problème à résoudre s'écrit donc sous forme matricielle :

$$Y = W * A$$

On désigne par W la matrice de passage entre Y et A. Cette matrice est triviale, puisqu'il s'agit d'une matrice de passage entre un vecteur d'inconnues et un vecteur des sommes croisées de ces inconnues.

Dans le cas où les composantes transversales ($i_{M1}$ ;$i_{M2}$) sont prises comme égales à zéro, la matrice W est une matrice de 1 et de 0 qui permet de passer du vecteur des composantes inconnues ($a_{M1}$ ;$a_{M2}$) à leurs sommes croisées ($a_{M1} + a_{M2}$). Si les composantes transversales ($i_{M1}$ ;$i_{M2}$) sont prises comme non nulles, la matrice W est une matrice comprenant des valeurs de x et y, ce qui permet de passer du vecteur des composantes inconnues ($a^1_{M1}$, $b^1_{M1}$, ,... $a^1_{M2}$, $b^1_{M2,...}$ ) à leur sommes croisées ($a^1_{M1+}b^1_{M1}$*y ...; $a^1_{M2+}b^1_{M2}$*x ...). Il est clair que le nombre d'inconnues augmente.

Etant donné que nous disposons d'une estimation des sommes $\alpha_{M1}(x)+\alpha_{M2}(y)$ des composantes inconnues, c'est à dire du vecteur Y, obtenue par l'inversion du cosinus précédemment décrite, il est possible d'estimer A. On peut par exemple estimer A en effectuant une inversion par moindre carrés :

$$A = (W^T W + \lambda I)^{-1} * W^T * Y \, ,$$

où I est la matrice identité, $\lambda$ un coefficient réel, et « $^T$ » la fonction de transposition d'une matrice.

Le coefficient réel $\lambda$ est un coefficient de régularisation, car la matrice $W^T W$ est en général mal conditionnée. Il est déterminé empiriquement et est typiquement de l'ordre de $10^{-7}$. Dans le cas simple où l'on suppose les marches parfaitement parallèles (composantes transversales $i_{M1}$,$i_{M2}$ nulles), alors la matrice pseudo-inverse de W s'écrit de façon suivante: pour chacune de ses lignes (la ligne i correspondant au miroir $S_i$) on a des valeurs nulles sauf pour les M colonnes correspondant aux différences de chemin optique formées par la combinaison du miroir $S_i$ et d'un miroir $S'_j$. Les valeurs non nulles sont toutes égales à 1/N.

A l'issue de cette inversion par moindre carrées, on dispose d'une estimation des composantes inconnues $a_{M1}$,$a_{M2}$. On en déduit immédiatement les hauteurs de marche $h_{M1}$, $h_{M2}$, par les relations $h_{M1} = p_{M1}+a_{M1}$ et $h_{M2}=p_{M2}+a_{M2}$, ce qui était l'objectif de l'étape d'estimation 22.

A l'étape 23, on en déduit par conséquent les différences de chemin optique, par la relation $\delta(x,y) = h_{M1}(x) + h_{M2}(y)$.

Dans ce deuxième mode de réalisation, il est très avantageux d'itérer l'étape d'estimation des N+M composantes inconnues en intégrant à la composante connue ($p_{M1}$ ;$p_{M2}$) utilisée pour l'itération courante la composante inconnue ($a_{M1}$ ;$a_{M2}$) déterminée à l'itération précédente de ce mode de réalisation. En effet, les résultats issus de l'inversion du cosinus sont d'autant plus précis que l'erreur de connaissance est faible.

Des simulations ont montré dans le cas d'un faisceau 2 incident monochromatique de longueur d'onde $\lambda=10\mu m$, et en supposant l'interférogramme d'intensité I(x,y) non bruité, que deux itérations permettent de déterminer les différences de chemin optique $\delta(x,y)$ avec une erreur de l'ordre du nanomètre, voire inférieure.

Dans ce deuxième mode de réalisation, on met en oeuvre au cours de l'étape 22 une estimation des sommes croisées $a_{M1}+a_{M2}$ des composantes inconnues par l'inversion du cosinus dans l'expression $I(x,y)=\cos(2\pi.\sigma.(p_{M1}+p_{M2}+a_{M1}+a_{M2}))$. Cette estimation peut également se faire sous certaines conditions par linéarisation de l'équation $I(x,y)=\cos(2\pi.\sigma.(p_{M1}+p_{M2}+a_{M1}+a_{M2}))$. Il est alors nécessaire que le terme $2\pi.\sigma.(a_{M1}+a_{M2})$ soit petit devant le chiffre 1.

Par ailleurs, il est parfois nécessaire d'estimer l'amplitude du faisceau 2 incident monochromatique, que l'on ne connaît pas toujours parfaitement. Cette estimation est requise dès lors que l'amplitude n'est pas connue à mieux que 0,1%.

Le procédé selon l'invention comprend alors une étape 24 d'estimation de l'amplitude, nommée $\alpha$, du faisceau 2 incident monochromatique. En général, cette étape d'estimation de l'amplitude $\alpha$ du faisceau est mise en oeuvre en minimisant l'écart entre l'intensité I(x,y) de l'interférogramme et l'intensité modélisée en utilisant les différences de chemin optique $\delta(x,y)$ connues a priori ou estimées par le procédé selon l'invention.

L'étape 24 d'estimation de l'amplitude $\alpha$ du faisceau 2 monochromatique peut en particulier être effectuée en minimisant la fonction $f(\alpha) = I(x,y) - \alpha.\cos(2\pi.\sigma.\delta(x,y))$, où $\alpha$ est l'amplitude du faisceau que l'on cherche à estimer, $\sigma$ le nombre d'onde du faisceau et $\delta(x,y)$ la différence de chemin optique.

Avantageusement, on utilise la différence de chemin optique $\delta(x,y)$ estimée par le procédé à l'issue de l'étape 23. En effet, c'est à l'issue cette étape que l'on dispose de la meilleure connaissance des différences de chemin optique $\delta(x,y)$.

Il a été constaté que le procédé selon l'invention permet d'obtenir une précision de mesure améliorée des différences de chemin optique $\delta$ (x,y) même dans le cas d'un interférogramme d'intensité I(x,y) très bruité (rapport entre le niveau de la ligne de base et le bruit de l'interférogramme égal à 100), et d'un faisceau 2 incident monochromatique à basse longueur d'onde. Dans ce cas, la précision reste de l'ordre de quelques nanomètres, y compris en présence d'un tilt des échelettes.

Le procédé de métrologie selon l'invention trouve de nombreuses applications et notamment dans le domaine spatial, et permet alors d'obtenir une connaissance des différences de chemin optique précise et mise à jour en fonction de l'évolution des conditions de vol de l'aéronef embarquant l'interféromètre.

Cette connaissance des différences de chemin optique permet d'effectuer diverses observations grâce à l'interféromètre : caractérisation de la présence de gaz dans l'atmosphère (profil de présence de gaz de type $CO_2$, ozone, CO, $CH_4$...) en spectroscopie infrarouge, mesure de pics de pollutions.... Ces mesures sont obtenues après traitement des interférogrammes mesurés par l'interféromètre, ledit traitement nécessitant la mesure des différences de chemin optique en vol et/ou au sol par le procédé de métrologie selon l'invention.

Ainsi, l'utilisation d'un interféromètre mettant en oeuvre le procédé de métrologie selon l'invention, notamment à bord d'un satellite, permet une mise à jour et une connaissance fine des différences de chemin optique, et donc des mesures de spectroscopie précises.

Le procédé de métrologie selon l'invention est rapide, précis, et nécessite une instrumentation beaucoup moins lourde et complexe que les procédés de l'art antérieur, ce qui facilite son utilisation en vol.

## Revendications

1. Procédé de métrologie d'un interféromètre (1) statique comprenant
   une lame (3) séparatrice apte à séparer un faisceau incident (2) vers un premier (M1) et un deuxième miroirs (M2),
   le premier miroir (M1) présentant N surfaces ($S_1$, $S_2$, $S_3$... ,$S_N$) réfléchissantes sensiblement planes et parallèles entre elles, lesdites surfaces étant décalées entre elles et réalisant N premières hauteurs de marche ($h_{M1}(x)$),
   le deuxième miroir (M2) présentant M surfaces ($S'_1$, $S'_2$, $S'_3$... ,$S'_M$) réfléchissantes sensiblement planes et parallèles entre elles, lesdites surfaces étant décalées entre elles et réalisant M deuxièmes hauteurs de marche ($h_{M2}(y)$),
   les hauteurs de marche ($h_{M1}(x)$,$h_{M2}(y)$) correspondant à la distance entre chaque surface ($S_1$, $S_2$, $S_3$... ,$S_N$, $S'_1$, $S'_2$, $S'_3$... ,$S'_M$) et la lame (3),
   de sorte que les deux miroirs (M1,M2) fournissent une pluralité de faisceaux réfléchis présentant entre eux des différences de chemin optique ($\delta(x,y)$) égales aux N*M sommes croisées des premières hauteurs de marche ($h_{M1}(x)$) et des deuxièmes hauteurs de marche ($h_{M2}(y)$),
   ledit procédé étant **caractérisé en ce qu'**il comprend au moins les étapes consistant à :

   - acquérir un interférogramme d'intensité (I(x,y)) à partir d'un faisceau (2) incident monochromatique,
   - estimer (22) lesdites N+M premières et deuxièmes hauteurs de marche ($h_{M1}(x)$;$h_{M2}(y)$) par résolution d'un système d'équations liant l'intensité I(x,y) mesurée aux N+M premières et deuxièmes hauteurs de marche, ledit système exploitant les corrélations et dépendances géométriques des miroirs, et
   - déduire (23) les N*M différences de chemin optique ($\delta(x,y)$) à partir des N+M premières et deuxièmes hauteurs de marche.

2. Procédé selon la revendication 1, dans lequel le système d'équations liant l'intensité I(x,y) aux premières et deuxièmes hauteurs de marche $h_{M1}$, $h_{M2}$ s'écrit $I(x,y)=\cos(2\pi.\sigma.(h_{M1}+h_{M2}))$, où $\sigma$ est le nombre d'onde du faisceau (2) incident monochromatique.

3. Procédé selon l'une des revendications 1 ou 2, dans lequel les premières et deuxièmes hauteurs de marche ($h_{M1}(x)$;$h_{M2}(y)$) sont chacune prises comme égales à la somme d'une composante connue ($p_{M1}$;$p_{M2}$) et d'une composante inconnue ($a_{M1}$;$a_{M2}$), et en ce que l'on estime les N+M composantes inconnues ($a_{M1}$;$a_{M2}$) par résolution dudit système.

4. Procédé selon la revendication 3, dans lequel on itère l'étape d'estimation des N+M composantes inconnues en intégrant à la composante connue ($p_{M1}$ ;$p_{M2}$) utilisée pour l'itération courante la composante inconnue ($a_{M1}$ ;$a_{M2}$) déterminée à l'itération précédente.

5. Procédé selon l'une des revendications 3 à 4, dans lequel la composante inconnue ($a_{M1}$ ;$a_{M2}$) est la somme d'une composante axiale ($a^1_{M1}$ ;$a^1_{M2}$) selon la direction (x ; y) du faisceau (2) incident qui tombe sur ce miroir, et d'une composante transversale ($i_{M1}$ ;$i_{M2}$) supérieure ou égale à zéro représentant les inclinaisons par rapport à au moins une des directions de l'espace (x,y) des surfaces ($S_1$, $S_2$, $S_3$... ,$S_M$) réfléchissantes du premier miroir (M1) et/ou des surfaces (S'$_1$, S'$_2$, S'$_3$... ,S'$_M$) réfléchissantes du deuxième miroir (M2),
l'étape d'estimation (22) des premières et deuxièmes hauteurs de marche comprenant l'estimation desdites composantes axiales et transversales.

6. Procédé selon la revendication 5, dans lequel chaque composante transversale (i$_{M1}$ ;i$_{M2}$) est modélisée selon :

$$i_{M1}(x, y) = b^1_{M_1}(x).y \text{ et } i_{M2}(x, y) = b^1_{M2}(y).x,$$

où $( b^1_{M_1}, b^1_{M_2} )$ sont des coefficients d'inclinaisons supérieurs ou égaux à zéro.

7. Procédé selon l'une des revendications 3 à 6, dans lequel on met en oeuvre pour résoudre ledit système l'étape consistant à
estimer les sommes croisées (a$_{M1}$+a$_{M2}$) des composantes inconnues à partir de l'équation I(x,y) = cos(2$\pi$.$\sigma$(p$_{M1}$+p$_{M2}$+a$_{M1}$+a$_{M2}$)),
pour en déduire une estimation (22) desdites N+M premières et deuxièmes hauteurs de marche.

8. Procédé selon la revendication 7, dans lequel l'estimation des sommes (a$_{M1}$+a$_{M2}$) des composantes inconnues est mise en oeuvre en appliquant la fonction cosinus inverse à l'équation I(x,y)=cos(2$\pi$.$\sigma$.(p$_{M1}$+p$_{M2}$+a$_{M1}$+a$_{M2}$)).

9. Procédé selon l'une des revendications 7 à 8, dans lequel on estime les composantes inconnues a$_{M1}$,a$_{M2}$ représentées par un vecteur A, à partir de l'estimation des sommes (a$_{M1}$+a$_{M2}$) desdites composantes inconnues, représentées par un vecteur Y, en inversant l'équation matricielle Y = W * A, où W est la matrice de passage entre Y et A.

10. Procédé selon l'une des revendications 3 à 6, dans lequel l'estimation des composantes inconnues a$_{M1}$, a$_{M2}$ est mis en oeuvre en effectuant un développement limité de l'équation I(x,y)=cos(2$\pi$.$\sigma$.(p$_{M1}$+p$_{M2}$+a$_{M1}$+a$_{M2}$)) autour de l'infiniment petit 2$\pi$.$\sigma$.(a$_{M1}$+a$_{M2}$).

11. Procédé selon l'une des revendications 1 à 10, comprenant en outre une étape (24) d'estimation de l'amplitude $\alpha$ du faisceau (2) incident monochromatique.

12. Procédé selon la revendication 11, dans lequel l'étape (24) d'estimation de l'amplitude $\alpha$ du faisceau (2) incident monochromatique de nombre d'onde $\sigma$ est mise en oeuvre en minimisant selon $\alpha$ la fonction f($\alpha$) = I(x,y)-$\alpha$.cos(2$\pi$.$\sigma$.$\delta$(x,y)).

13. Procédé selon l'une des revendications 1 à 12, dans lequel
l'interféromètre étant utilisé pour analyser un rayonnement compris dans une bande spectrale,
le faisceau (2) incident est émis par une source (4) monochromatique de longueur d'onde comprise dans ladite bande spectrale.

**Patentansprüche**

1. Metrologieverfahren für ein statisches Interferometer (1), umfassend:

einen Strahlteiler (3), der geeignet ist, um einen einfallenden Strahl (2) in Richtung auf einen ersten (M1) und einen zweiten (M2) Spiegel zu teilen,
wobei der erste Spiegel (M1) N reflektierende Oberflächen (S$_1$, S$_2$, S$_3$, ..., S$_N$) aufweist, die im Wesentlichen eben und zueinander parallel sind, wobei die Oberflächen im Verhältnis zueinander versetzt sind und N erste Stufenhöhen (h$_{M1}$(x)) ausbilden,
wobei der zweite Spiegel (M2) M reflektierende Oberflächen (S'$_1$, S'$_2$, S'$_3$, ..., S'$_M$) aufweist, die im Wesentlichen eben und zueinander parallel sind, wobei die Oberflächen im Verhältnis zueinander versetzt sind und M zweite Stufenhöhen (h$_{M2}$(y)) ausbilden,
wobei die Stufenhöhen (h$_{M1}$(x), h$_{M2}$(y)) dem Abstand zwischen jeder Oberfläche (S$_1$, S$_2$, S$_3$, ..., S$_N$, S'$_1$, S'$_2$, S'$_3$, ..., S'$_M$) und dem Teiler (3) entsprechen,

so dass die beiden Spiegel (M1, M2) eine Vielzahl von reflektierten Strahlen bereitstellen, die untereinander Strahlengangdifferenzen ($\delta(x,y)$) aufweisen, die gleich den N*M Quersummen der ersten Stufenhöhen ($h_{M1}(x)$) und der zweiten Stufenhöhen ($h_{M2}(y)$) sind,
wobei das Verfahren **dadurch gekennzeichnet ist, dass** es mindestens folgende Schritte umfasst:

- Erfassen eines Intensitätsinterferogramms ($I(x,y)$) aus einem monochromatischen einfallenden Strahl (2),
- Schätzen (22) der N+M ersten und zweiten Stufenhöhen ($h_{M1}(x)$; hM2 (y)) durch Lösen eines Gleichungssystems, das die gemessene Intensität $I(x,y)$ mit den N+M ersten und zweiten Stufenhöhen verbindet, wobei das System die Korrelationen und geometrischen Abhängigkeiten der Spiegel nutzt, und
- Ableiten (23) der N*M Strahlengangdifferenzen ($\delta(x,y)$) aus den N+M ersten und zweiten Stufenhöhen.

2. Verfahren nach Anspruch 1, wobei das Gleichungssystem, das die Intensität $I(x,y)$ mit den ersten und zweiten Stufenhöhen $h_{M1}$, $h_{M2}$ verbindet, als $I(x,y) = \cos(2\pi.\sigma.(h_{M1}+h_{M2}))$ geschrieben wird, wobei $\sigma$ die Wellenzahl des monochromatischen einfallenden Strahls (2) ist.

3. Verfahren nach einem der Ansprüche 1 oder 2, wobei die ersten und zweiten Stufenhöhen ($h_{M1}(x)$; $h_{M2}(y)$) als gleich der Summe einer bekannten Komponente ($p_{M1}$; $p_{M2}$) und einer unbekannten Komponente ($a_{M1}$; $a_{M2}$) genommen werden, und die N+M unbekannten Komponenten ($a_{M1}$; $a_{M2}$) durch Lösen des Systems geschätzt werden.

4. Verfahren nach Anspruch 3, wobei der Schritt des Schätzens der N+M unbekannten Komponenten iteriert wird, indem in die bekannte Komponente ($p_{M1}$; $p_{M2}$), die für die aktuelle Iteration verwendet wird, die unbekannte Komponente ($a_{M1}$; $a_{M2}$), die in der vorhergehenden Iteration bestimmt wurde, integriert wird.

5. Verfahren nach einem der Ansprüche 3 bis 4, wobei die unbekannte Komponente ($a_{M1}$; $a_{M2}$) die Summe
einer Axialkomponente ($a^1_{M1}$; $a^1_{M2}$) gemäß der Richtung (x; y) des einfallenden Strahls (2), der auf diesen Spiegel fällt, und
einer Querkomponente ($i_{M1}$; $i_{M2}$), die größer oder gleich null ist und die Neigungen im Verhältnis zu mindestens einer der Raumrichtungen (x, y) der reflektierenden Oberflächen ($S_1$, $S_2$, $S_3$, ..., $S_M$) des ersten Spiegels (M1) und/oder der reflektierenden Oberflächen ($S'_1$, $S'_2$, $S'_3$, ..., $S'_M$) des zweiten Spiegels (M2) darstellt,
ist, wobei der Schritt des Schätzens (22) der ersten und zweiten Stufenhöhen das Schätzen der Axial- und Querkomponenten umfasst.

6. Verfahren nach Anspruch 5, wobei jede Querkomponente ($i_{M1}$; $i_{M2}$) modelliert ist gemäß:

$$i_{M1}(x,y) = b^1_{M1}(x).y \text{ und } i_{M2}(x,y) = b^1_{M2}(y).x,$$

wobei ($b^1_{M1}$, $b^1_{M2}$) Neigungskoeffizienten sind, die größer oder gleich null sind.

7. Verfahren nach einem der Ansprüche 3 bis 6, wobei zum Lösen des Gleichungssystems der Schritt des Schätzens der Quersummen ($a_{M1}+a_{M2}$) der unbekannten Komponenten aus der Gleichung $I(x,y) = \cos(2\pi.\sigma(p_{M1}+p_{M2}+a_{M1}+a_{M2}))$,
umgesetzt wird, um daraus eine Schätzung (22) der N+M ersten und zweiten Stufenhöhen abzuleiten.

8. Verfahren nach Anspruch 7, wobei die Schätzung der Summen ($a_{M1}+a_{M2}$) der unbekannten Komponenten durch Anwenden der inversen Kosinusfunktion auf die Gleichung $I(x,y) = \cos(2\pi.\sigma(p_{M1}+p_{M2}+a_{M1}+a_{M2}))$ umgesetzt wird.

9. Verfahren nach einem der Ansprüche 7 bis 8, wobei die unbekannten Komponenten $a_{M1}$, $a_{M2}$, die durch einen Vektor A dargestellt werden, aus der Schätzung der Summen ($a_{M1}+a_{M2}$) der unbekannten Komponenten, die durch einen Vektor Y dargestellt werden, durch Umkehren der Matrixgleichung Y = W * A geschätzt werden, wobei W die Übergangsmatrix zwischen Y und A ist.

10. Verfahren nach einem der Ansprüche 3 bis 6, wobei die Schätzung der unbekannten Komponenten $a_{M1}$, $a_{M2}$ durch Ausführen einer begrenzten Entwicklung der Gleichung $I(x,y) = \cos(2n.\sigma(p_{M1}+p_{M2}+a_{M1}+a_{M2}))$ um das unendlich kleine $2\pi.\sigma(a_{M1}+a_{M2})$ umgesetzt wird.

**11.** Verfahren nach einem der Ansprüche 1 bis 10, ferner umfassend einen Schritt (24) des Schätzens der Amplitude $\alpha$ des monochromatischen einfallenden Strahls (2).

**12.** Verfahren nach Anspruch 11, wobei der Schritt (24) des Schätzens der Amplitude $\alpha$ des monochromatischen einfallenden Strahls (2) der Wellenzahl $\sigma$ durch Minimieren der Funktion $f(\alpha) = I(x,y) - \alpha.\cos(2\pi.\sigma.\delta(x,y))$ gemäß $\alpha$ umgesetzt wird.

**13.** Verfahren nach einem der Ansprüche 1 bis 12, wobei
das Interferometer zum Analysieren einer Strahlung, die in einem Spektralband enthalten ist, verwendet wird,
der einfallende Strahl (2) von einer monochromatischen Quelle (4), die eine Wellenlänge aufweist, die in dem Spektralband enthalten ist, emittiert wird.

**Claims**

**1.** A metrology method for a static interferometer (1), comprising:

a beam splitter (3) adapted for splitting an incident beam (2) towards a first (M1) and a second (M2) mirror,
the first mirror (M1) having N reflecting surfaces ($S_1$, $S_2$, $S_3$, ..., $S_N$), which are substantially planar and parallel to each other, said surfaces being offset with respect to each other and achieving N first step heights ($h_{M1}(x)$),
the second mirror (M2) having M reflecting surfaces ($S'_1$, $S'_2$, $S'_3$, ..., $S'_M$), which are substantially planar and parallel to each other, said surfaces being offset with respect to each other and achieving M second step heights ($h_{M2}(y)$),
the step heights ($h_{M1}(x)$, $h_{M2}(y)$) corresponding to the distance between each surface ($S_1$, $S_2$, $S_3$, ..., $S_N$, $S'_1$, $S'_2$, $S'_3$, ..., $S'_M$) and the splitter (3),
so that both mirrors (M1, M2) provide a plurality of reflected beams having among them optical path differences ($\delta(x,y)$) equal to N*M horizontal checksums of the first step heights ($h_{M1}(x)$) and the second step heights ($h_{M2}(y)$),
said method being **characterized in that** it comprises at least the steps of:

- acquiring an intensity interferogram ($I(x,y)$) from a monochromatic incident beam (2),
- estimating (22) said N+M first and second step heights ($h_{M1}(x)$; $h_{M2}(y)$) by solving an equation system linking the measured intensity $I(x,y)$ to the N+M first and second step heights, said system making use of the correlations and geometric dependencies of the mirrors, and
- deducing (23) the N*M optical path differences ($\delta(x,y)$) from the N+M first and second step heights.

**2.** The method according to claim 1, wherein the system of equations linking the intensity $I(x,y)$ to the first and second step heights $h_{M1}$, $h_{M2}$ is written $I(x,y) = \cos(2\pi.\sigma.(h_{M1}+h_{M2}))$, where $\sigma$ is the wave number of the monochromatic incident beam (2).

**3.** The method according to any of claims 1 or 2, wherein the first and second step heights ($h_{M1}(x)$; $h_{M2}(y)$) are each taken as being equal to the sum of a known component ($p_{M1}$; $p_{M2}$) and an unknown component ($a_{M1}$; $a_{M2}$), and the N+M unknown components ($a_{M1}$; $a_{M2}$) are estimated by solving said system.

**4.** The method according to claim 3, wherein the step of estimating the N+M unknown components is iterated by integrating into the known component ($p_{M1}$; $p_{M2}$) used for the current iteration the unknown component ($a_{M1}$; $a_{M2}$) determined in the preceding iteration.

**5.** The method according to any of claims 3 to 4, wherein the unknown component ($a_{M1}$; $a_{M2}$) is the sum
of an axial component ($a^1_{M1}$; $a^1_{M2}$) according to the direction (x; y) of the incident beam (2) falling on this mirror, and
a transverse component ($i_{M1}$; $i_{M2}$) greater or equal to zero representing the slopes with respect to at least one of the spatial directions (x, y) of the reflecting surfaces ($S_1$, $S_2$, $S_3$, ..., $S_M$) of the first mirror (M1) and/or the reflecting surfaces ($S'_1$, $S'_2$, $S'_3$, ..., $S'_M$) of the second mirror (M2),
the step of estimating (22) the first and second step heights including estimating said axial and transverse components.

**6.** The method according to claim 5, wherein each transverse component ($i_{M1}$; $i_{M2}$) is modeled according to:

$$i_{M1}(x,y) = b^1_{M1}(x).y \text{ and } i_{M2}(x,y) = b^1_{M2}(y).x,$$

where ( $b^1_{M1}$, $b^1_{M2}$ ) are slope coefficients greater or equal to zero.

7. The method according to any of claims 3 to 6, wherein for solving said system of equations the step of estimating the horizontal checksums $(a_{M1}+a_{M2})$ of the unknown components from the equation $I(x,y) = \cos(2\pi.\sigma(p_{M1}+p_{M2}+a_{M1}+a_{M2}))$, is implemented so as to deduce an estimate (22) of said N+M first and second step heights.

8. The method according to claim 7, wherein the estimate of the sums $(a_{M1}+a_{M2})$ of the unknown components is implemented by applying the inverse cosine function to the equation $I(x,y) = \cos(2\pi.\sigma(p_{M1}+p_{M2}+a_{M1}+a_{M2}))$.

9. The method according to any of claims 7 to 8, wherein the unknown components $a_{M1}$, $a_{M2}$, represented by a vector A, are estimated from the estimate of the sums $(a_{M1}+a_{M2})$ of said unknown components, represented by a vector Y, by inverting the matrix equation Y = W * A, where W is the transfer matrix between Y and A.

10. The method according to any of claims 3 to 6, wherein the estimate of the unknown components $a_{M1}$, $a_{M2}$ is implemented by performing a limited development of the equation $I(x,y) = \cos(2\pi.\sigma(p_{M1}+p_{M2}+a_{M1}+a_{M2}))$ about the infinitely small $2\pi.\sigma(a_{M1}+a_{M2})$.

11. The method according to any of claims 1 to 10, further comprising a step (24) of estimating the amplitude $\alpha$ of the monochromatic incident beam (2).

12. The method according to claim 11, wherein the step (24) of estimating the amplitude $\alpha$ of the monochromatic incident beam (2) having the wave number $\sigma$ is implemented by minimizing the function $f(\alpha) = I(x,y) - \alpha.\cos(2\pi.\sigma.d(x,y))$ according to $\alpha$.

13. The method according to any of claims 1 to 12, wherein
the interferometer is used for analyzing a radiation comprised within a spectral band,
the incident beam (2) is emitted by a monochromatic source (4) having a wavelength comprised within said spectral band.

**FIG. 1**

FIG. 2

# FIG. 3

20

Acquisition d'un
interférogramme I(x, y)

22

Estimation des
hauteurs de marche
$h_{M1}(x)$, $h_{M2}(y)$
par résolution du système

21

Modélisation d'un
système liant I(x, y)
aux hauteurs de marche
$h_{M1}(x)$, $h_{M2}(y)$

23

Déduction des
différences de chemin
optique $\delta(x, y)$

24

Estimation de
l'amplitude $\alpha$ du
faisceau incident

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 2787186

**Littérature non-brevet citée dans la description**

*   **BRACHET et al.** Static Fourier transform spectroscopy breadboards for atmospheric chemistry and climate. *Proceedings of the SPIE,* 2008, vol. 7100, 710019-1, 710019-11